# EUROPÄISCHE PATENTANMELDUNG

(11) **EP 3 045 985 A1**
(43) Veröffentlichungstag der Anmeldung: **20.07.2016**
(21) Anmeldenummer: 15151278.7
(22) Anmeldetag: 15.01.2015
(51) Int. Cl.: G05B 19/042, G05B 19/418

(54) **Verfahren zum Versetzen der Arbeitszellen eines Automatisierungssystems in einen Energiesparmodus**

(71) Anmelder: Siemens Aktiengesellschaft, 80333 München (DE)
(72) Erfinder: Himmler, Matthias, 90425 Nürnberg (DE); Würfel, Christian, 91058 Erlangen (DE)

(57) **Zusammenfassung**

Die Erfindung betrifft eine Steuerungseinrichtung und ein Verfahren zum Betrieb eines Automatisierungssystems (AS) mit mehreren verketteten Arbeitszellen (Z1-Z6), wobei jede Arbeitszelle (Z1-Z6) von vorangehenden Arbeitszelle (Z1-Z6) eine Wartezeit (WZ) erhält und anhand der erhaltenen Wartezeit (WZ) und einer eigenen Taktzeit (TZ) eine neue Wartezeit (WZ) für nachfolgende Arbeitszellen (Z1-Z6) und eine eigene Pausenzeit (PZ) ermittelt, so dass die Arbeitszellen (Z1-Z6) mittels eines Pausenkommandos von der Steuerungseinrichtung in einen Energiesparmodus versetzt werden kann.

## Beschreibung

Die vorliegende Erfindung betrifft ein Verfahren zum Betrieb eines zur Steuerung und/oder Überwachung eines technischen Prozesses, insbesondere eines technischen Produktionsprozesses, bestimmten Automatisierungssystems mit mehreren aufgrund eines jeweiligen technischen Prozesses verketteten Arbeitszellen. Konkret betrifft die Erfindung ein Verfahren zum Betrieb eines Automatisierungssystems zur Aktivierung von Energiesparfunktionen innerhalb des Automatisierungssystems. Die Erfindung betrifft im Weiteren eine nach dem Verfahren arbeitende Steuerungseinrichtung zur Steuerung und/oder Überwachung jeweils zumindest einer Arbeitszelle sowie ein Computerprogramm zur Implementierung des Verfahrens.

Mit PROFIenergy hat PROFIBUS & PROFINET International (PI) eine standardisierte Datenschnittstelle entwickelt, die auf dem unter der Marke PROFINET bekannten offenen Industrial Ethernet- Standard für die Automatisierung basiert. Damit lässt sich der Energiebedarf von Automatisierungsgeräten und/oder angeschlossenen Energieverbrauchern durch Aktivierung eines Energiesparmodus reduzieren.

Aktuell werden Geräte, die über diese Datenschnittstelle ansprechbar sind (PROFIenergy devices), von einer jeweils zuständigen übergeordneten Steuerungseinrichtung mittels Vorgabe sogenannter Pausenzeiten in energetisch günstige Zustände geschaltet. Das jeweilige Gerät empfängt die Pausenzeit und entscheidet anschließend selbstständig, in welchen Energiezustand (Energy-Saving-Mode; Energiesparmodus) es wechselt. Ebenso ermittelt das jeweilige Gerät eine sogenannte Hochlaufzeit (Time to operate) und übermittelt diese zurück an die übergeordnete Steuerungseinrichtung. Die Hochlaufzeit ist dabei der entscheidende Zeitwert, welchen die Steuerungseinrichtung berücksichtigen muss, um rechtzeitig vor Produktionsbeginn oder vor Wiederaufnahme der Produktion einen Befehl zum "Aufwecken" (Reaktivieren aus dem Energiesparmodus) an die einzelnen Geräte zu versenden, damit diese zum Pausenende wieder betriebsbereit sind.

Da PROFIenergy von jeder Steuerungseinrichtung autark für die ihr zugeordneten Geräte abgewickelt wird, können bei verketteten Anlagen/Prozessen (zum Beispiel in der Automobilindustrie beim Karosseriebau) Abhängigkeiten zu benachbarten Arbeitszellen nahezu gar nicht oder nur mit sehr hohem Aufwand in einer nochmals übergeordneten Kontrolleinheit berücksichtigt werden. Eine Voraussetzung für eine solche Berücksichtigung in einer übergeordneten Kontrolleinheit wäre, dass die Kontrolleinheit über die gesamte Anlage, also von jeder davon umfassten Arbeitszelle, detaillierte Informationen zur aktuellen Produktionssituation haben muss. Mittels dieser Information könnte die Kontrolleinheit an jede Arbeitszelle eine jeweils individuelle Pausenzeit übermitteln. Elementare Voraussetzung ist aber, dass die Kontrolleinheit in sehr kurzen Intervallen (im Sekundenbereich) die Ist-Situation der gesamten Anlage erfasst und kontinuierlich aktualisiert, um auf Zustandsänderungen in der Anlage, zum Beispiel Störungen und dergleichen, unverzüglich reagieren zu können.

Aktuell übermittelt jede Steuerungseinrichtung (Zellencontroller) individuell die Pausenzeiten an die ihr zugeordneten (unterlagerten) Geräte. Eine Berücksichtigung der jeweiligen Energiezustände und/oder Hochlaufzeiten vor- oder nachgelagerter Arbeitszellen und der dortigen jeweiligen Prozesse oder Anlageteile ist nur auf applikativer Ebene mit erheblichem Aufwand durch den Anlagenbauer oder Anwender möglich.

Bei einem proprietären Lösungsansatz wird als Kontrolleinheit ein übergeordneter Schaltcontroller verwendet, der die Zustände der einzelnen Zellencontroller ermittelt und auf Basis dieser Informationen Pausenkommandos an die einzelnen Zellencontroller sendet, welche diese an die jeweils zugeordneten Geräte weiterleiten.

Ein solcher Schaltcontroller benötigt eine hohe Rechenleistung und zudem wird bei der Übermittlung der Pausenkommandos an die einzelnen Zellencontroller und speziell bei der Ermittlung der Zustände der einzelnen Zellencontroller eine hohe Kommunikationslast erzeugt. Schließlich stellt eine Parametrierung eines solchen Schaltcontrollers einen nicht zu vernachlässigenden Aufwand dar, weil jedes anzusteuernde Gerät individuell parametriert werden muss.

Eine Aufgabe der vorliegenden Erfindung besteht darin, eine Möglichkeit zur einfachen Ermittlung und Weiterleitung von Pausenzeiten innerhalb eines Automatisierungssystems anzugeben.

Diese Aufgabe wird erfindungsgemäß mit den Merkmalen des Anspruchs 1 gelöst. Dazu ist bei einem Verfahren der eingangs genannten Art mit mehreren aufgrund eines jeweiligen technischen Prozesses verketteten Arbeitszellen, wobei jeder Arbeitszelle zumindest eine Steuerungseinrichtung zugeordnet ist und die Steuerungseinrichtungen miteinander kommunikativ verbunden sind, wobei jede Arbeitszelle zumindest einen Energieverbraucher umfasst, der mittels eines Pausenkommandos von der Steuerungseinrichtung in einen Energiesparmodus versetzt werden kann und wobei jeder Arbeitszelle entsprechend einem jeweiligen Anteil an dem technischen Prozess eine Taktzeit zugeordnet ist, Folgendes vorgesehen: Jede Arbeitszelle erhält zumindest von einer entlang der Verkettung vorangehenden Arbeitszelle einen Zeitwert für eine Wartezeit und jede Arbeitszelle ermittelt anhand der erhaltenen Wartezeit und einer eigenen Taktzeit eine Wartezeit für entlang der Verkettung nachfolgende Arbeitszellen sowie eine eigene Pausenzeit, während derer von der Arbeitszelle umfasste Energieverbraucher in einen Energiesparmodus versetzt werden können.

Bei einer besonderen Ausführungsform des Verfahrens ist eine Art einer Ermittlung einer jeweiligen Pausenzeit von einem Zustand der jeweiligen Arbeitszelle abhängig. Mittels solcher Zustände lässt sich zum Beispiel berücksichtigen, ob die jeweilige Arbeitszelle in Betrieb ist, ob eine Störung vorliegt, ob die Arbeitszelle leergelaufen ist oder ob die Arbeitszelle ihr Taktende erreicht hat, ohne das jeweilige Werkstück oder dergleichen an die nachfolgende Arbeitszelle weitergeben zu können, zum Beispiel aufgrund einer dort vorliegenden Störung. Durch die Berücksichtigung solcher Zustände können Warte- und Pausenzeiten mit und gegen die Materialflussrichtung im jeweiligen technischen Prozess ermittelt werden.

Der Vorteil der Erfindung besteht darin, dass jede Arbeitszelle - im Folgenden mitunter auch nur kurz als Zelle bezeichnet - selbständig die Wartezeiten für nachfolgende oder nachfolgende und vorangehende Zellen und die eigene Pausenzeit ermittelt. Eine übergeordnete Funktionseinheit, wie zum Beispiel der weiter oben erwähnte Schaltcontroller, ist damit nicht erforderlich. Damit wird auch die mit der Verwendung eines solchen Schaltcontrollers einhergehende erhebliche Kommunikationslast in dem Automatisierungssystem vermieden.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist. Schließlich ist darauf hinzuweisen, dass das hier angegebene Verfahren auch entsprechend der abhängigen Vorrichtungsansprüche weitergebildet sein kann und umgekehrt. Bei einer speziellen Ausführungsform des Verfahrens fungiert ein in Soft- oder Firmware oder Soft- und Firmware implementierter Funktionsbaustein als Mittel zur Ermittlung der Wartezeit für entlang der Verkettung nachfolgende Arbeitszellen und der eigenen Pausenzeit. Der Funktionsbaustein erhält als Eingangsdaten von einer jeweils vorangehenden Arbeitszelle einen Zeitwert für eine dort mittels eines vorangehenden, funktionsidentischen Funktionsbausteins ermittelte Wartezeit und übermittelt als Ausgangsdaten an eine nachfolgende Arbeitszelle und einen dortigen nachfolgenden und ebenfalls funktionsidentischen Funktionsbaustein einen Zeitwert für die lokal ermittelte Wartezeit. Des Weiteren ermittelt der Funktionsbaustein anhand der von dem vorangehenden Funktionsbaustein erhaltenen Wartezeit und der für den nachfolgenden Funktionsbaustein ermittelten Wartezeit sowie der eigenen Taktzeit die eigene Pausenzeit.

Der Funktionsbaustein und - bei einem Automatisierungssystem mit üblicher Komplexität - eine Mehrzahl von Funktionsbausteinen bewirkt den automatischen und einheitlichen Datenaustausch zwischen den den einzelnen Arbeitszellen zugeordneten Steuerungseinrichtungen. Jeder Funktionsbaustein ist der Ort zur Ermittlung der eigenen Pausenzeit und der für die jeweils entlang der Verkettung nachfolgende Arbeitszelle relevanten Wartezeit. Indem jeder Funktionsbaustein jeweils einer Steuerungseinrichtung einer Arbeitszelle zugeordnet ist, wird mittels der Funktionsbausteine und deren kommunikativer Verbindung ein einfacher und standardisierter Austausch von im Zusammenhang mit einer Aktivierung von Energiesparfunktionen relevanten Wartezeiten innerhalb des jeweiligen Automatisierungssystems möglich.

Bei einer weiteren Ausführungsform eines auf der Verwendung solcher Funktionsbausteine basierenden Verfahrens sind die Funktionsbausteine entlang der zugrunde liegenden Verkettung der Arbeitsstationen miteinander verknüpft, indem ein Ausgang, an dem eine ermittelte Wartezeit ausgegeben wird, mit einem Eingang des entlang der Verkettung nachfolgenden Funktionsbausteins verknüpft wird, an dem eine ermittelte Wartezeit zuführbar ist. Auf diese Weise ergibt sich eine kommunikative Verbindung jeweils zweier Funktionsbausteine, bei der ein Ausgang eines als Sender fungierenden Funktionsbausteins mit einem passenden Eingang eines als Empfänger fungierenden Funktionsbausteins verknüpft ist, so dass die von einem Funktionsbaustein ermittelten Daten an den entlang der Verkettung nachfolgenden Funktionsbaustein quasi durchgereicht werden. Die zur Aktivierung von Energiesparfunktionen innerhalb des Automatisierungssystems zu übermittelnden Daten reduzieren sich damit auf diejenigen Daten, die zwischen jeweils zwei paarweise zusammengeschlossenen Funktionsbausteinen übertragen werden müssen.

Die oben genannte Aufgabe wird auch mit einer Steuerungseinrichtung zur Steuerung und/oder Überwachung einer Arbeitszelle eines verketteten technischen Prozesses gelöst, die nach dem Verfahren wie hier und im Folgenden beschrieben arbeitet und dazu als Mittel zur Durchführung des Verfahrens zum Beispiel eine Implementation des oben erwähnten Funktionsbausteins umfasst. Die Erfindung ist dabei bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Steuerungseinrichtung oder ein Antriebssystem, in dessen Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: ein verteiltes Automatisierungssystem mit mehreren aufgrund eines jeweils automatisierten technischen Prozesses verketteten Zellen (Arbeitsstationen) sowie einer übergeordneten Funktionseinheit, welche durch Ermittlung und Übermittlung von Pausenzeiten Energiesparfunktionen innerhalb des Automatisierungssystems auslöst,
- FIG 2: ein verteiltes Automatisierungssystem wie in FIG 1, ohne eine für das Auslösen von Energiesparfunktionen vorgesehene übergeordnete Funktionseinheit,
- FIG 3: einen Funktionsbaustein zur Ermittlung und Übermittlung von Pausenzeiten von und an im jeweils automatisierten technischen Prozess vorangehende und nachfolgende Zellen,
- FIG 4: das Automatisierungssystem gemäß FIG 2 mit unter Verwendung von Funktionsbausteinen gemäß FIG 3 ermittelten Zeitwerten, insbesondere Pausenzeiten und
- FIG 5 bis FIG 7: ein verteiltes Automatisierungssystem wie in FIG 1, mit unterschiedlichen Zuständen der davon umfassten Arbeitsstationen und den jeweils resultierenden Pausenzeiten sowie
- FIG 8: das Automatisierungssystem gemäß FIG 7 mit unter Verwendung von Funktionsbausteinen gemäß FIG 3 ermittelten Zeitwerten, insbesondere Pausenzeiten.

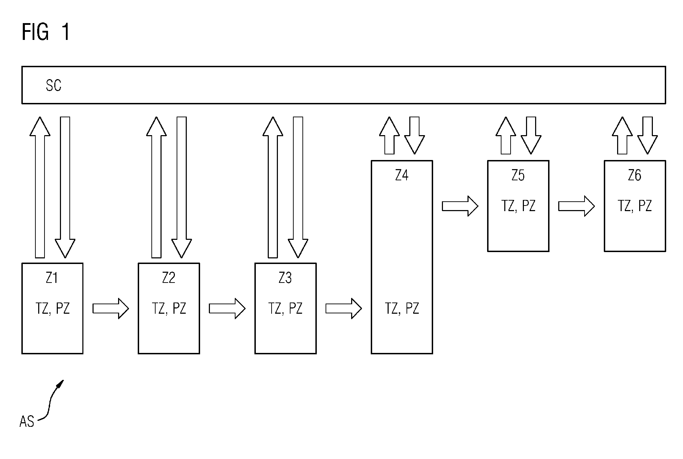

Die Darstellung in FIG 1 zeigt in schematisch vereinfachter Form ein Automatisierungssystem AS mit einer Mehrzahl von in der Fachterminologie üblicherweise als Zellen Z1-Z6 bezeichneten Arbeitsstationen oder dergleichen. Bei der dargestellten Situation umfasst das Automatisierungssystem AS exemplarisch sechs Zellen. Die Anzahl der Zellen Z1-Z6 ist aber theoretisch unbegrenzt und auch für den hier vorgestellten Ansatz ohne Belang.

Jeder Zelle Z1-Z6 ist in an sich bekannter Art und Weise zu deren Steuerung und/oder Überwachung eine nicht separat gezeigte und als Zellencontroller fungierende Steuerungseinrichtung zugeordnet, zum Beispiel eine Steuerungseinrichtung in Form einer speicherprogrammierbaren Steuerung, eines dezentralen Feldgeräts oder dergleichen. Die Steuerungseinrichtungen sind innerhalb des Automatisierungssystems AS kommunikativ, zum Beispiel über einen Feldbus, miteinander verbunden, so dass ein Austausch von Daten möglich ist. Grundsätzlich kann eine Steuerungseinrichtung auch mehrere Zellen Z1-Z6 steuern und/oder überwachen, dann besteht eine Zuordnung jeweils einer Steuerungseinrichtung zu den jeweiligen Zellen.

Für den hier zu erläuternden Ansatz ist maßgeblich, dass jede Steuerungseinrichtung zumindest einen zu der jeweils gesteuerten und/oder überwachten Zelle Z1-Z6 gehörigen Energieverbraucher (Verbraucher) mittels einer entsprechenden Steueranweisung (Pausenkommando) in einen Energiesparmodus versetzen kann. Diese Funktionalität ist für sich genommen bekannt. Insofern kann beispielhaft auf das unter der Bezeichnung PROFIenergy bekannte Energiemanagement-Profil verwiesen werden.

Ein Verbraucher ist zum Beispiel ein von einer Zelle Z1-Z6 umfasster Elektromotor, ein Heizaggregat oder dergleichen. Eine Zelle Z1-Z6 kann mehr als einen in einen Energiesparmodus versetzbaren Verbraucher umfassen. Im Interesse einer besseren Lesbarkeit bezieht sich die nachfolgende Beschreibung jeweils auf die einzelne Zelle Z1-Z6 selbst. Dabei ist die nachfolgende Beschreibung so zu lesen, dass bei einer Aktivierung eines Energiesparmodus einer bestimmten Zelle Z1-Z6 der oder jeder davon umfasste und in einen Energiesparmodus versetzbare Energieverbraucher (Verbraucher) in seinen jeweiligen Energiesparmodus versetzt wird. Weiter im Interesse einer besseren Lesbarkeit wird im Folgenden nicht zwischen einer einzelnen Zelle Z1-Z6 und deren jeweiliger Steuerungseinrichtung unterschieden. Eine Übermittlung von Daten von zum Beispiel einer ersten Zelle Z1-Z6 an eine zweite Zelle Z1-Z6 ist daher stets so zu lesen, dass von der der ersten Zelle Z1-Z6 zugeordneten Steuerungseinrichtung Daten an die der zweiten Zelle Z1-Z6 zugeordnete Steuerungseinrichtung übermittelt werden.

Das Automatisierungssystem AS ist zur Automatisierung eines selbst nicht gezeigten verketteten technischen Prozesses vorgesehen, zum Beispiel eines technischen Prozesses in Form eines verketteten Produktionsprozesses. Die exemplarisch gezeigten Zellen Z1-Z6 werden im Folgenden auch als erste Zelle Z1, zweite Zelle Z2 usw. bezeichnet. Bei der dargestellten Situation handelt es sich bei der vierten Zelle Z4 zum Beispiel um einen sogenannten Heber und bei der fünften Zelle Z5 um einen Puffer. Mittels des Hebers (vierte Zelle Z4) werden zum Beispiel Werkstücke in den Puffer (fünfte Zelle Z5) gegeben. Mittels der ersten, zweiten, dritten und sechsten Zelle Z1-Z3, Z6 finden Arbeitsschritte im Rahmen des automatisierten technischen Prozesses (zum Beispiel Fügen, Schweißen, Kleben usw.) statt. Bei dem technischen Prozess handelt es sich zum Beispiel um einen Prozess zum Fertigen von Fahrzeugkarosserien oder Karosserieteilen. Entsprechend handelt es sich bei den Werkstücken um Karosserien oder Karosserieteile. Die konkrete Funktion einer jeden Zelle Z1-Z6 ist durch den jeweils automatisierten technischen Prozess bestimmt, aber für die folgenden Ausführungen ohne Belang.

Die Darstellung in FIG 1 zeigt eine Situation mit dem eingangs erwähnten Schaltcontroller SC. Dieser ermittelt (aufwärts gewandte Blockpfeile) einen Zellenstatus jeder Zelle Z1-Z6 und übermittelt (abwärts gewandte Blockpfeile) an jede Zelle Z1-Z6 eine jeweilige Pausenzeit PZ. Die dabei von und zur jeweiligen Zelle Z1-Z6 übertragenen Daten werden im Rahmen der kommunikativen Verbindung der Zellen Z1-Z6 und des Schaltcontrollers SC über den jeweiligen Feldbus übertragen.

Die horizontalen Blockpfeile veranschaulichen die Verkettung der einzelnen Zellen Z1-Z6 im Rahmen des jeweiligen technischen Prozesses und veranschaulichen insofern zum Beispiel einen üblicherweise diskontinuierlichen, nämlich durch jeweilige Taktzeiten TZ der einzelnen Zellen Z1-Z6 bestimmten Materialfluss zwischen den Zellen.

Wie ebenfalls eingangs bereits erwähnt, ist für eine solche Funktion in erheblichem Umfang eine Parametrierung des Schaltcontrollers SC für jedes von einer der Zellen Z1-Z6 umfasste Gerät erforderlich. Darüber hinaus ergibt sich innerhalb des Automatisierungssystems AS eine erhebliche Kommunikationslast, denn der Schaltcontroller SC muss in kurzen Zyklen (im Sekundenbereich) das individuelle Geräteverhalten jedes von einer der Zellen Z1-Z6 umfassten Geräts kennen und kontinuierlich aktualisieren, um mittels solcher Informationen die bestmöglichen Pausenzeiten PZ zu ermitteln. Ein Pausenkommando wird vom Schaltcontroller SC an die Steuerungseinrichtungen (Zellencontroller) der Zellen Z1-Z6 gegeben, welche dieses mit dem jeweiligen PROFIenergy-Kommando an die einzelnen Geräte weiterleiten.

Mittels eines solchen Schaltcontrollers SC ist es aber zum Beispiel nur mit erheblichem Aufwand möglich, Pausenzeiten PZ aus dynamischen Materialflüssen abzuleiten. Der Fokus des Schaltcontrollers SC liegt nicht auf der Berücksichtigung von dynamischen Zeiten. Vielmehr wird der Schaltcontroller SC zur Auflösung komplexer Schaltpfade bei Berücksichtigung von Abhängigkeiten zwischen einzelnen Anlagenteilen/Zellen Z1-Z6 verwendet. Beispielsweis muss ein Förderband erst eingeschaltet werden, bevor ein Roboter Teile darauf ablegen darf.

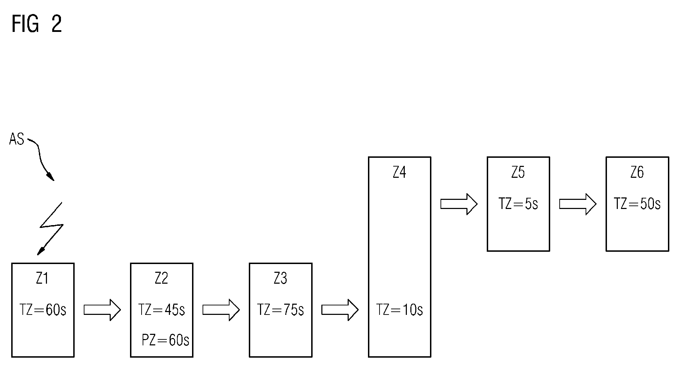

Die Darstellung in FIG 2 zeigt das Automatisierungssystem AS gemäß FIG 1 mit einzelnen exemplarischen Taktzeiten TZ der Zellen Z1-Z6. Wenn zum Beispiel der ersten Zelle Z1 kein Material mehr zugeführt wird (Zustand "Leerlauf"; veranschaulicht durch den Blitz), werden die nachfolgenden Zellen Z2-Z6 nach Verstreichen einer bestimmten Zeitspanne gewissermaßen "arbeitslos", so dass sich dort ebenfalls der Zustand "Leerlauf" ergibt, und können in den Energiesparmodus versetzt werden. Die erste Zelle Z1 wird nicht in den Energiesparmodus versetzt und bleibt aktiv, denn neues Material kann jederzeit eintreffen und dann muss die Zelle Z1 unmittelbar betriebsbereit sein.

Bei einer Taktzeit von zum Beispiel 60 Sekunden gibt die erste Zelle Z1 nach 60 Sekunden ein Werkstück an die nachfolgende zweite Zelle Z2 weiter. Die jeweilige Taktzeit TZ einer Zelle Z1-Z6 ist also kurz gefasst diejenige Zeit, die minimal zur Verfügung steht, um eine nachfolgende und in den Energiesparmodus versetzte Zelle Z1-Z6 wieder zu aktivieren.

Wenn - gemäß der obigen Voraussetzung - bei der ersten Zelle Z1 kein Material mehr eintrifft, wird mindestens für die Dauer der jeweiligen Taktzeit (Z1.TZ=60s) kein Werkstück an die nachfolgende zweite Zelle Z2 ausgegeben. Die zweite Zelle Z2 kann demnach in den Energiesparmodus versetzt werden, sofern diese innerhalb der Taktzeit TZ der vorangehenden Zelle Z1 wieder aktivierbar ist. Die jeweilige Pausenzeit PZ ergibt sich hier also anhand der Taktzeit TZ der unmittelbar vorangehenden Zelle Z1 (Z2.PZ=60s). Wenn die zweite Zelle Z2 auf diese Weise in den Energiesparmodus versetzt ist, können auch die im Prozess nachfolgenden Zellen Z3-Z6 in den Energiesparmodus versetzt werden. Allgemein ergibt sich die jeweilige Pausenzeit PZ dabei anhand der kumulierten Taktzeiten TZ aller einer jeweiligen Zelle Z1-Z6 vorangehenden Zellen Z1-Z6.

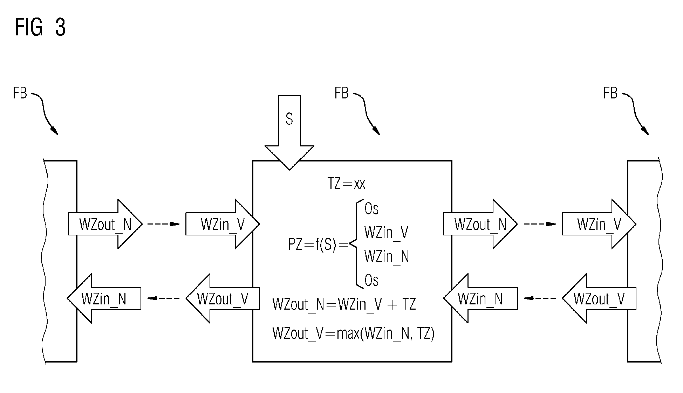

Die Kumulation der Pausenzeiten PZ und die Ermittlung einer jeweiligen Pausenzeit PZ erfolgt mittels eines in Software oder Firmware oder Soft- und Firmware implementierten Funktionsbausteins FB, der in der Darstellung in FIG 3 in der Mitte in schematisch vereinfachter Form gezeigt ist. Der Funktionsbaustein FB fungiert als Mittel zur automatischen Ermittlung einer Pausenzeit PZ einer jeweiligen Zelle Z1-Z6 und gehört entsprechend zu einem von einer Steuerungseinrichtung einer jeweiligen Zelle Z1-Z6 ausgeführten Steuerungsprogramm oder einer bei einer Ausführung eines solchen Steuerungsprogramms verwendeten sogenannten Laufzeitumgebung. Die von dem Funktionsbaustein FB im Rahmen des dort implementierten Algorithmus ausgeführten Berechnungen sind in der Darstellung in FIG 3 im Innern der den Funktionsbaustein FB begrenzenden Rahmenlinie angegeben. Rechts und links des Funktionsbausteins FB sind in der Darstellung in FIG 3 entsprechende Funktionsbausteine FB der in dem jeweiligen technischen Prozess nachfolgenden bzw. vorangehenden Zelle Z1-Z6 gezeigt. Jeder Funktionsbaustein FB umfasst denselben Algorithmus zur Berechnung von Wartezeiten WZ und der jeweiligen Pausenzeit PZ.

Der Funktionsbaustein FB berücksichtigt für die Auswahl einer Art zur Ermittlung der Pausenzeit PZ einen Zustand S der jeweiligen Zelle Z1-Z6. Als mögliche Zustände S kommen dabei zumindest die Zustände S "Betrieb", "Leerlauf", "Taktende" und "Störung" in Betracht. Beim Zustand "Betrieb" ist eine Aktivierung eines Energiesparmodus weder notwendig noch sinnvoll. Entsprechend beträgt die Pausenzeit PZ 0 Sekunden (0 s). Beim Zustand "Leerlauf" wird als Pausenzeit PZ eine Wartezeit WZ von entlang der Verkettung vorangehenden Zellen Z1-Z6 verwendet. Beim Zustand "Taktende" wird als Pausenzeit PZ eine Wartezeit WZ von entlang der Verkettung nachfolgenden Zellen Z1-Z6 verwendet. Beim Zustand "Störung" erfolgt für die von der Störung betroffene Zelle Z1-Z6 ebenfalls keine Aktivierung eines Energiesparmodus, weil die Zelle Z1-Z6 betriebsbereit bleiben muss, damit die Störung möglichst schnell beseitigt werden kann.

Die sich anhand der Berücksichtigung des Zustands S ergebenden unterschiedlichen Arten zur Ermittlung der Pausenzeit PZ sind nachfolgend zusammengefasst. In der Darstellung in FIG 3 ist diese Abhängigkeit symbolisch als "PZ = f(S)" eingetragen.

Pausenzeit PZ in Abhängigkeit vom Zustand S:
a) 0 s beim Zustand "Betrieb"
b) Wartezeit WZ von entlang der Verkettung vorangehenden Zellen Z1-Z6 beim Zustand "Leerlauf",
c) Wartezeit WZ von entlang der Verkettung nachfolgenden Zellen Z1-Z6 beim Zustand "Taktende" und
d) 0 s beim Zustand "Störung".

Ausgehend von dem oben vorausgesetzten Szenario ("Leerlauf" bei der ersten Zelle Z1) ergeben sich mittels solcher Funktionsbausteine FB für die einzelnen Zellen Z1-Z6 die folgenden Werte, wobei WZin_V für eine Wartezeit WZ von entlang der Verkettung vorangehenden Zellen Z1-Z6, WZin_N für eine Wartezeit WZ von entlang der Verkettung nachfolgende Zellen Z1-Z6, WZout_V für eine Wartezeit WZ für entlang der Verkettung vorangehende Zellen Z1-Z6 und WZout_N für eine Wartezeit WZ für entlang der Verkettung nachfolgende Zellen Z1-Z6 steht:
Erste Zelle Z1 (Zustand S "Leerlauf"):
   TZ = 60s
   WZin_V = ?? = Vorgabewert, z.B. 0s
   WZin_N = Z2.WZout_V = 75s
   ⇒ WZout_N = WZin_V + TZ = 0s + 60s = 60s
   ⇒ WZout_V = max(WZin_N, TZ) = max(75s, 60s) = 75s
   ⇒ PZ = WZin_V = 0s
Zweite Zelle Z2 (Zustand S "Leerlauf"):
   TZ = 45s
   WZin_V = Z1.WZout_N = 60s
   WZin_N = Z3.WZout_V = 75s
   ⇒ WZout_N = WZin_V + TZ = 60s + 45s = 105s
   ⇒ WZout_V = max(WZin_N, TZ) = max (75s, 45s) = 75s
   ⇒ PZ = WZin_V = 60s
Dritte Zelle Z3 (Zustand S "Leerlauf"):
   TZ = 75s
   WZin_V = Z2.WZout_N = 105s
   WZin_N = Z4.WZout_V = 50s
   ⇒ WZout_N = WZin_V + TZ = 105s + 75s = 180s
   ⇒ WZout_V = max(WZin_N, TZ) = max (50s, 75s) = 75s
   ⇒ PZ = WZin_V = 105s
Vierte Zelle Z4 (Zustand S "Leerlauf"):
   TZ = 10s
   WZin_V = Z3.WZout_N = 180s
   WZin_N = Z5.WZout_V = 50s
   ⇒ WZout_N = WZin_V + TZ = 180s + 10s = 190s
   ⇒ WZout_V = max(WZin_N, TZ) = max (50s, 10s) = 50s
   ⇒ PZ = WZin_V = 180s
Fünfte Zelle Z5 (Zustand S "Leerlauf"):
   TZ = 5s
   WZin_V = Z4.WZout_N = 190s
   WZin_N = Z6.WZout_V = 50s
   ⇒ WZout_N = WZin_V + TZ = 190s + 5s = 195s
   ⇒ WZout_V = max(WZin_N, TZ) = max (50s, 5s) = 50s
   ⇒ PZ = WZin_V = 190s
Sechste Zelle Z6 (Zustand S "Leerlauf"):
   TZ = 50s
   WZin_V = Z5.WZout_N = 195s
   WZin_N = ?? = Vorgabewert, z.B. = 0s
   ⇒ WZout_N = WZin_V + TZ = 195s + 50s = 245s
   ⇒ WZout_V = max(WZin_N, TZ) = max (0s, 50s) = 50s
   ⇒ PZ = WZin_V = 195s

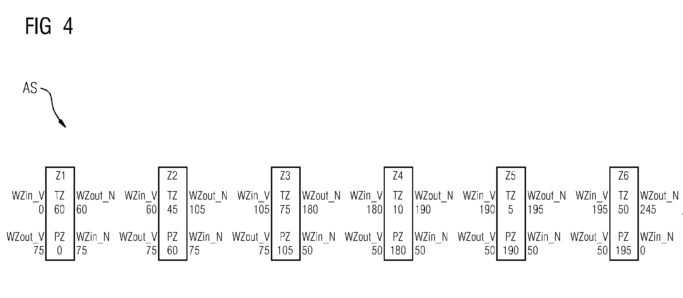

Dies ist mit entsprechenden Zahlenwerten auf Basis des Szenarios in FIG 2 auch in der Darstellung in FIG 4 gezeigt. Die Zahlenwerte bezeichnen jeweils Zeitwerte, sind also um die Einheit "s" für Sekunden zu ergänzen. In der vorangehenden textuellen Übersicht sind Referenzen auf eine vorangehende oder nachfolgende Zelle mit der üblichen "Punkt-Notation" dargestellt, wobei sich zum Beispiel "Z5.WZout_N" auf den Zahlenwert "WZout_N" der fünften Zelle Z5 bezieht. Ein Austausch der Daten zwischen jeweils zwei Funktionsbausteinen FB, also dem Funktionsbaustein FB einer jeweiligen Zelle Z1-Z6 sowie dem Funktionsbaustein FB einer dieser Zelle Z1-Z6 nachfolgenden Zelle Z1-Z6 und dem Funktionsbaustein FB einer dieser Zelle Z1-Z6 vorangehenden Zelle Z1-Z6 erfolgt im Rahmen der kommunikativen Verbindung der Zellen Z1-Z6, nämlich im Rahmen der kommunikativen Verbindung von deren Steuerungseinrichtungen.

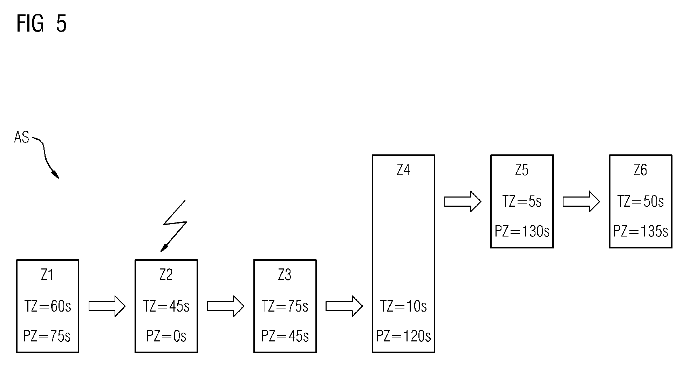

Bei der Darstellung in FIG 5 ist eine Situation gezeigt, bei der bei der zweiten Zelle Z2 eine durch den "Blitz" veranschaulichte Störung vorliegt. Die horizontalen Blockpfeile geben nur die Richtung des sich bei störungsfreiem Betrieb ergebenden Materialflusses wieder und veranschaulichen entsprechend nicht die Übermittlung von Daten zwischen den einzelnen Funktionsbausteinen FB. Dafür wird auf die Darstellung in FIG 3 verwiesen.

Die Störung wird als Zustand S bei der Ausführung des Funktionsbausteins FB (FIG 3) berücksichtigt. Entsprechend beträgt die Pausenzeit PZ der zweiten Zelle Z2 0 Sekunden. Aufgrund der Störung der zweiten Zelle Z2 erreicht die vorangehende erste Zelle Z1 nach Ablauf ihrer Taktzeit TZ den Zustand S "Taktende", so dass deren Funktionsbaustein FB deren Pausenzeit PZ aufgrund der Wartezeit WZ der entlang der Verkettung nachfolgenden Zellen Z3-Z6 ermittelt. Bestimmend ist dabei die maximale Taktzeit der nachfolgenden Zellen Z3-Z6 (Z1.PZ = Z1.WZinN = ... = max(Z3.WZout_V, T3.TZ) = 75 s.

Ebenfalls aufgrund der Störung der zweiten Zelle Z2 kommen alle der zweiten Zelle Z2 nachfolgenden Zellen Z3-Z6 nach einer gewissen Zeit in den Zustand "Leerlauf", so dass sich deren Pausenzeiten PZ anhand der Wartezeiten WZ der entlang der Verkettung vorangehenden Zellen Z2-Z5 ergeben: Z3.PZ = WZin_V = Z2.WZout_N; Z4.PZ = WZin_V = Z3.WZout_N; Z5.PZ = WZin_V = Z4.WZout_N und Z6.PZ = WZin_V = Z5.WZout_N. Die jeweils resultierenden Zahlenwerte sind in der Darstellung in FIG 5 eingetragen.

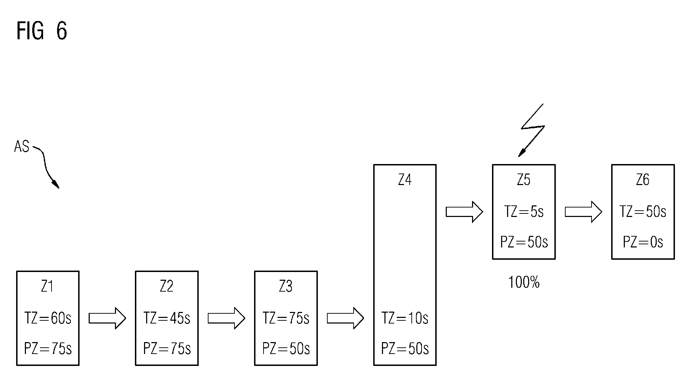

Bei der Darstellung in FIG 6 ist eine Situation gezeigt, bei der bei der fünften Zelle Z5 ein durch den "Blitz" veranschaulichtes Erreichen der Füllgrenze des Puffers (Zelle Z5: Füllstand 100%) vorliegt. Damit ergibt sich für die fünfte Zelle Z5 der Zustand S "Taktende". Entsprechend ermittelt deren Funktionsbaustein FB deren Pausenzeit PZ aufgrund der Wartezeit WZ von entlang der Verkettung nachfolgenden Zellen Z1-Z6, hier nur der sechsten Zelle Z6. Die der fünften Zelle Z5 vorangehenden Zellen Z1-Z4 erreichen ebenfalls sukzessive den Zustand S "Taktende". Dann ergibt sich deren Pausenzeit PZ aufgrund der Taktzeit TZ der vorangehenden Zelle Z1-Z3 oder der maximalen Taktzeit TZ der vorangehenden Zellen Z1-Z3. Die jeweils resultierenden Zahlenwerte sind in der zugehörigen Darstellung in FIG 6 eingetragen.

Bei einer als Puffer fungierenden Zelle Z1-Z6, hier der fünften Zelle Z5, kann bei der Ermittlung der Pausenzeiten PZ mit Multiplikatoren gearbeitet werden, so dass sich eine zusätzliche Dynamik ergibt (der Puffer "atmet"). Wenn beispielsweise bei einem zu 100% gefüllten Puffer die nachfolgende Zelle Z6 eine Taktzeit TZ von 60 s hat und eine Wartezeit von fünf Takten akzeptiert wird, ergibt sich die von der als Puffer fungierenden Zelle Z5 ausgegebene Wartezeit WZ als WZout_V = max(5 x WZin_V, TZ) = 300 s.

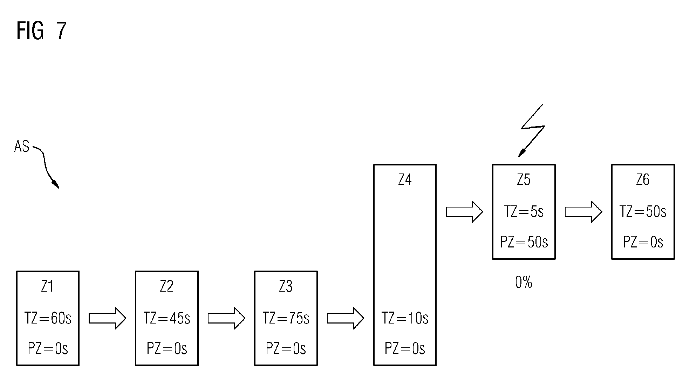

Die Darstellung in FIG 7 zeigt abschließend eine Situation, bei der bei der fünften Zelle Z5 ein durch den "Blitz" veranschaulichtes Leerlaufen des Puffers (Zelle Z5: Füllstand 0%) vorliegt. Dies kann sich im Betrieb des Automatisierungssystems AS zum Beispiel im Anschluss an die in FIG 2 (kein Material für die erste Zelle Z1) oder die in FIG 5 (Störung bei der zweiten Zelle Z2) gezeigte Situation ergeben. Für die fünfte Zelle Z5 ergibt sich dann der Zustand S "Leerlauf" und folglich ergibt sich deren Pausenzeit PZ aufgrund der Wartezeit WZ von entlang der Verkettung vorangehenden Zellen Z1-Z6, hier den Zellen Z1-Z4. Diese vorangehenden Zellen Z1-Z4 erreichen sukzessive den Zustand S "Taktende", so dass sich die dortigen Pausenzeiten PZ aufgrund der Wartezeit WZ von entlang der Verkettung nachfolgenden Zellen Z1-Z6 ergeben. Bei einem Leerlauf der fünften Zelle Z5 ergibt sich schließlich auch für die nachfolgende sechste Zelle Z6 der Zustand S "Leerlauf", so dass sich deren Pausenzeit PZ ebenfalls anhand der kumulierten Taktzeiten TZ der vorangehenden Zellen Z1-Z5 ergibt.

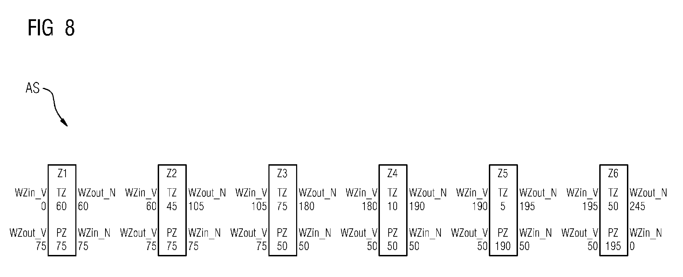

Dies ist nachfolgend im Einzelnen noch einmal aufgeschlüsselt und ansonsten mit den resultierenden Zeitwerten auch in der Darstellung in FIG 8 gezeigt.

Erste Zelle Z1 (Zustand S "Taktende"):
TZ = 60s
   WZin_V = ?? = Vorgabewert, z.B. 0s
   WZin_N = Z2.WZout_V = 75s
   ⇒ WZout_N = WZin_V + TZ = 0s + 60s = 60s
   ⇒ WZout_V = max(WZin_N, TZ) = max(75s, 60s) = 75s
   ⇒ PZ = WZin_N = 75s
Zweite Zelle Z2 (Zustand S "Taktende"):
   TZ = 45s
   WZin_V = Z1.WZout_N = 60s
   WZin_N = Z3.WZout_V = 75s
   ⇒ WZout_N = WZin_V + TZ = 60s + 45s = 105s
   ⇒ WZout_V = max(WZin_N, TZ) = max (75s, 45s) = 75s
   ⇒ PZ = WZin_N = 75s
Dritte Zelle Z3 (Zustand S "Taktende"):
   TZ = 75s
   WZin_V = Z2.WZout_N = 105s
   WZin_N = Z4.WZout_V = 50s
   ⇒ WZout_N = WZin_V + TZ = 105s + 75s = 180s
   ⇒ WZout_V = max(WZin_N, TZ) = max (50s, 75s) = 75s
   ⇒ PZ = WZin_N = 50s
Vierte Zelle Z4 (Zustand S "Taktende"):
   TZ = 10s
   WZin_V = Z3.WZout_N = 180s
   WZin_N = Z5.WZout_V = 50s
   ⇒ WZout_N = WZin_V + TZ = 180s + 10s = 190s
   ⇒ WZout_V = max(WZin_N, TZ) = max (50s, 10s) = 50s
   ⇒ PZ = WZin_N = 50s
Fünfte Zelle Z5 (Zustand S "Leerlauf"):
   TZ = 5s
   WZin_V = Z4.WZout_N = 190s
   WZin_N = Z6.WZout_V = 50s
   ⇒ WZout_N = WZin_V + TZ = 190s + 5s = 195s
   ⇒ WZout_V = max(WZin_N, TZ) = max (50s, 5s) = 50s
   ⇒ PZ = WZin_V = 190s
Sechste Zelle Z6 (Zustand S "Leerlauf"):
   TZ = 50s
   WZin_V = Z5.WZout_N = 195s
   WZin_N = ?? = Vorgabewert, z.B. = 0s
   ⇒ WZout_N = WZin_V + TZ = 195s + 50s = 245s
   ⇒ WZout_V = max(WZin_N, TZ) = max (0s, 50s) = 50s
   ⇒ PZ = WZin_V = 195s

Mittels der Funktionsbausteine FB und deren Verkettung innerhalb des Automatisierungssystems AS gelingt also das "Durchreichen" der Pausenzeiten PZ und kumulierter Pausenzeiten PZ an im technischen Prozess nachfolgende Zellen Z1-Z6, so dass zum Beispiel bei einer Störung am Beginn des technischen Prozesses stromabwärts (bezogen auf den Materialfluss) angeordnete Zellen Z1-Z6 für eine jeweils passende Pausenzeit PZ in den Energiesparmodus versetzt werden können.

Der Vorteil eines solchen Funktionsbausteins FB und - bei einem konkreten Automatisierungssystem AS - einer Mehrzahl verketteter Funktionsbausteine FB besteht in dem erreichten einheitlichen Datenaustausch zwischen den einzelnen Zellen Z1-Z6, nämlich dem Datenaustausch zwischen den den jeweiligen Zellen Z1-Z6 zugeordneten Steuerungseinrichtungen. Der einheitliche Datenaustausch basiert auf einer einheitlichen Schnittstelle zur Versorgung jedes Funktionsbausteins FB mit den Zeitwerten der in dem jeweiligen technischen Prozess vorangehenden oder nachfolgenden Zellen Z1-Z6. Insgesamt ergibt sich damit ein einheitliches Datenaustauschformat und der Funktionsbaustein FB kann in ein zur Steuerung und/oder Überwachung einer Zelle Z1-Z6 bestimmtes Steuerungsprogramm oder ein zur Ausführung eines solchen Steuerungsprogramms notwendiges Laufzeitsystem integriert sein. Damit ist mittels des Funktionsbausteins FB - und im praktischen Einsatz mittels einer Mehrzahl verknüpfter Funktionsbausteine FB - eine Möglichkeit gegeben, dass zukünftig die einzelnen Zellen Z1-Z6, nämlich deren Steuerungseinrichtungen, insbesondere Steuerungseinrichtungen in Form von PROFIenergy-Controllern, miteinander "sprechen", also ohne eine übergeordnete Instanz, wie zum Beispiel den in FIG 1 gezeigten Schaltcontroller SC, die für eine Aktivierung eines bestimmten Energiezustands, insbesondere eines Energiesparmodus, notwendigen Daten direkt untereinander austauschen. Ausgehend von einer Zelle Z1-Z6, bei der zum Beispiel eine Störung, insbesondere eine technische Störung oder eine Störung in Form von fehlendem oder fehlerhaftem Material, vorliegt, empfangen die Nachbarzellen Z1-Z6 direkt oder indirekt (über zwischengeschaltete Nachbarzellen Z1-Z6) mittels der verketteten Funktionsbausteine FB die jeweiligen Informationen und können ihre eigene aktuelle Pausenzeit PZ berechnen und diese mittels standardisierter Kommandos, zum Beispiel der standardisierten PROFIenergy-Kommandos, an das oder jedes von der jeweiligen Zelle Z1-Z6 umfasste und in einen Energiesparmodus versetzbare Gerät übermitteln, welches auf den Empfang eines solchen Kommandos selbsttätig den energetisch sinnvollsten Zustand ermittelt und diesen anschließend einnimmt.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Abschließend lässt sich die hier vorgelegte Beschreibung kurz wie folgt zusammenfassen: Angegeben werden ein Verfahren zum Betrieb eines Automatisierungssystems AS mit mehreren aufgrund eines jeweiligen technischen Prozesses verketteten Arbeitszellen (Zellen) Z1-Z6, wobei jede Zelle Z1-Z6 von einer entlang der Verkettung vorangehenden Zelle Z1-Z6 einen Zeitwert für eine Wartezeit WZ erhält und anhand der erhaltenen Wartezeit WZ und einer eigenen Taktzeit TZ eine Wartezeit WZ für entlang der Verkettung nachfolgende Zellen Z1-Z6 und eine eigene Pausenzeit PZ ermittelt, sowie eine nach dem Verfahren arbeitende Steuerungseinrichtung und ein Computerprogramm zur Implementierung des Verfahrens. Zur Ausführung des Verfahrens wird ein spezieller Funktionsbaustein FB vorgeschlagen. Für jede von dem Automatisierungssystem AS umfasste Zelle Z1-Z6 ist ein eigener Funktionsbaustein FB vorgesehen. Die Funktionsbausteine sind entsprechend der Reihenfolge der Zellen Z1-Z6 im jeweiligen technischen Prozess miteinander verbunden, so dass jeder Funktionsbaustein FB Daten mit dem jeweils unmittelbar vorangehenden und dem unmittelbar nachfolgenden Funktionsbaustein FB austauschen kann. Jeder Funktionsbaustein FB erhält die kumulierten Wartezeiten WZ der entlang der Verkettung vorangehenden Funktionsbausteine FB gerade aufgrund der Verkettung der Funktionsbausteine FB. Jeder Funktionsbaustein FB läuft auf einer Steuerungseinheit ab, so dass im Ergebnis eine Kommunikation zwischen jeweils zwei benachbarten, nämlich entsprechend der Verkettung benachbarten Steuerungseinheiten, also eine Kommunikation von Zellencontroller zu Zellencontroller, insbesondere von PROFIenergy-Controller zu PROFIenergy-Controller, resultiert. Jeder Funktionsbaustein FB berücksichtigt die Verhältnisse aufgrund der Gesamtheit der vorangehenden Funktionsbausteine FB und ergänzt seine eigenen Daten für eine kumulierte Weitergabe entlang der Verkettung. Bei einer Berücksichtigung eines Zustands S der jeweiligen Zelle Z1-Z6 berücksichtigt der jeweilige Funktionsbaustein FB nur den Zustand S seiner "eigenen" Zelle (lokale Zelle) Z1-Z6 und ein Datenaustausch bezüglich der Zustände S anderer Zellen Z1-Z6 entlang der Folge verketteter Funktionsbausteine FB ist nicht notwendig.

## Patentansprüche

1. Verfahren zum Betrieb eines Automatisierungssystems (AS) mit mehreren aufgrund eines jeweiligen technischen Prozesses verketteten Arbeitszellen (Z1-Z6),
wobei jeder Arbeitszelle (Z1-Z6) zumindest eine Steuerungseinrichtung zugeordnet ist und die Steuerungseinrichtungen miteinander kommunikativ verbunden sind,
wobei jede Arbeitszelle (Z1-Z6) zumindest einen Energieverbraucher umfasst, der mittels eines Pausenkommandos von der Steuerungseinrichtung in einen Energiesparmodus versetzt werden kann,
wobei jeder Arbeitszelle (Z1-Z6) entsprechend dem jeweiligen Anteil an dem technischen Prozess eine Taktzeit (TZ) zugeordnet ist,
**dadurch gekennzeichnet,**
**dass** jede Arbeitszelle (Z1-Z6) von einer entlang der Verkettung vorangehenden Arbeitszelle (Z1-Z6) einen Zeitwert für eine Wartezeit (WZ) erhält und
**dass** jede Arbeitszelle (Z1-Z6) anhand der erhaltenen Wartezeit (WZ) und einer eigenen Taktzeit (TZ) eine Wartezeit (WZ) für entlang der Verkettung nachfolgende Arbeitszellen (Z1-Z6) und eine eigene Pausenzeit (PZ) ermittelt.

2. Verfahren nach Anspruch 1, wobei eine Art einer Ermittlung einer jeweiligen Pausenzeit (PZ) von einem Zustand (S) der jeweiligen Arbeitszelle (Z1-Z6) abhängig ist.

3. Verfahren nach Anspruch 1 oder 2, wobei als Mittel zur Ermittlung der Wartezeit (WZ) für entlang der Verkettung nachfolgende Arbeitszellen (Z1-Z6) und der eigenen Pausenzeit (PZ) ein Funktionsbaustein (FB) fungiert,
wobei der Funktionsbaustein (FB) als Eingangsdaten von einer jeweils vorangehenden Arbeitszelle (Z1-Z6) einen Zeitwert für eine dort mittels eines vorangehenden Funktionsbausteins (FB) ermittelte Wartezeit (WZ) erhält und als Ausgangsdaten an eine nachfolgende Arbeitszelle (Z1-Z6) und einen dortigen nachfolgenden Funktionsbaustein (FB) einen Zeitwert für die ermittelte Wartezeit (WZ) übermittelt und
wobei der Funktionsbaustein (FB) anhand der von dem vorangehenden Funktionsbaustein (FB) erhaltenen Wartezeit (WZ) und der für den nachfolgenden Funktionsbaustein (FB) ermittelten Wartezeit (WZ) sowie der eigenen Taktzeit (TZ) die eigene Pausenzeit (PZ) ermittelt.

4. Verfahren nach Anspruch 3, wobei entlang der Verkettung die Funktionsbausteine (FB) miteinander verknüpft sind, indem ein Ausgang, an dem eine ermittelte Wartezeit (WZ) ausgegeben wird, mit einem Eingang des entlang der Verkettung nachfolgenden Funktionsbausteins (FB) verknüpft wird, an dem eine ermittelte Wartezeit (WZ) zuführbar ist.

5. Computerprogramm mit Programmcodemitteln, um alle Schritte von jedem beliebigen der Ansprüche 1 bis 4 durchzuführen, wenn das Computerprogramm auf einer Steuerungseinrichtung zur Steuerung und/oder Überwachung einer Arbeitszelle (Z1-Z6) eines technischen Prozesses ausgeführt wird.

6. Steuerungseinrichtung mit einer Verarbeitungseinheit und einem Speicher, in den ein Computerprogramm nach Anspruch 5 geladen ist, das im Betrieb der Steuerungseinrichtung durch deren Verarbeitungseinheit im Rahmen einer Steuerung und/oder Überwachung einer Arbeitszelle (Z1-Z6) eines technischen Prozesses ausgeführt wird.
